# EUROPEAN PATENT APPLICATION

(11) **EP 4 800 158 A1**
(43) Date of publication of application: **02.09.2026**
(21) Application number: 25161111.7
(22) Date of filing: 28.02.2025
(51) Int. Cl.: C25B 1/04, C25B 9/77

(54) **A PRESSURIZED ALKALINE ELECTROLYSER STACK**

(71) Applicant: Stargate Hydrogen Solutions OÜ, 10621 Tallinn (EE)
(72) Inventor: Alperin, Roman, 10621 Tallinn (EE)
(74) Representative: KASTEL Patentanwälte PartG mbB

(57) **Abstract**

The various embodiments of the present invention disclose a pressurized alkaline electrolyser stack, comprising: a stack core (100a) comprising a plurality of electrolysis cells (200), wherein each electrolysis cell (200) comprises an anode chamber comprising an anode, a cathode chamber comprising a cathode, a diaphragm (206) separating the anode chamber and the cathode chamber, at least one cell frame (201) and at least one gasket (202). The stack core (100a) is configured to have a first stack core length *L*₁ and a first gasket stress *σ*₁ at a first design temperature *T*₁ and a second stack core length *L*₂ and a second gasket stress *σ*₂ at a second design temperature *T*₂. The first design temperature *T₁* is at least 80 degrees Celsius and the second design temperature *T₂* is less than 30 degrees Celsius. A stack core length difference *dL = L₁-L₂* is between 0 to 20 millimeters, and a gasket stress difference *dσ =σ₁-σ₂* is between 0 to 20 MPa.

## Description

### TECHNICAL FIELD OF THE INVENTION:

The present invention relates to an electrolyser stack, in particular the invention relates to a pressurized alkaline electrolyser stack comprising a stack core and a compression system.

### BACKGROUND OF THE INVENTION:

In alkaline water electrolysis, water is electrochemically converted into hydrogen and oxygen in alkaline medium: H₂O = H₂ + 0.5 O₂. An electrolysis cell comprises two electrodes (an anode and a cathode) and an electrolyte. The electrolyte comprises a liquid alkaline medium such as an aqueous solution of hydroxide solution. The alkaline electrolyte flows through the anode and cathode compartment of the cell, which are connected fluidically in parallel, thereby immersing the electrodes in the electrolyte. During operation, an electric potential is applied between the two electrodes, resulting in the flow of electrolysis current through the electrolysis cell. During operation, hydrogen is generated on the cathode according to the hydrogen evolution reaction (HER): 2 H₂O + 2e- = H₂ + 2 OH⁻, while oxygen is generated on the anode according to the oxygen evolution reaction (OER): 2 OH⁻ = 0.5 O₂ + H₂O + 2e⁻. The electrolysis cell further comprises a porous diaphragm capable of conducting hydroxide ions and separating both half-cells to prevent mixing of the product gases. The electrodes are placed on either side of the diaphragm in a sandwich-like manner.

It is advantageous to place the electrodes as close as possible to the diaphragm from both sides in a sandwich-like manner, which on one hand minimizes the distance between the electrodes and thus decreases the ionic resistance, and on other hand ensures that the hydrogen gas bubbles evolve mostly at the back side of the electrodes, which leads to reduced overpotentials. This arrangement, often referred to as "zero-gap configuration", thus results in improved cell efficiency. The positioning of the electrodes for this configuration is achieved by pressing the electrodes and the diaphragm together and adjusting the contact pressure via elastic or rigid spacers placed next to the electrodes on the sides opposite to the side facing the diaphragm. Alkaline cells are advantageously operated at a temperature between 60°C and 90°C, because at elevated temperatures the ionic conductivity of the alkaline medium increases, resulting in improved cell efficiency.

Alkaline electrolysis stacks comprise of multiple alkaline electrolysis cells connected electrically in series and fluidically in parallel. Electrical contact between adjacent cells is established via bipolar plates, each of which is in contact with two spacers. One of the spacers is in contact with the anode of a cell, and the other spacer is in contact with the cathode of the adjacent cell. The cells further comprise gaskets, which are designed to prevent the leakage of gases and alkaline medium out of the cell (external leakage), as well as leakage between the anode and the cathode inside the stack (internal leakage).

The higher the number of cells in the stack, the more hydrogen and oxygen can be produced in unit time. Similarly, the larger the surface area (footprint) of each cell in the stack, the more hydrogen and oxygen can be produced per cell at a fixed current density.

Alkaline electrolysis cell stacks can either operate at atmospheric pressure or at elevated pressure. The advantage of operating at elevated pressure is that hydrogen (and optionally oxygen) is produced at elevated pressure, thereby requiring fewer compressors and less energy to compress the gas to the desired pressure level. For pressurized alkaline electrolysers, typical operating pressures are in the range of 10 to 60 bar gauge pressure (barg). Pressurized operation commonly requires the cells to be circular (or essentially circular) in shape. Furthermore, pressurized stacks typically comprise cell frames, i.e. components that house at least the electrodes and the pressurized fluids. The cell frames comprise a central opening which forms the reaction chamber(s) in the cell. The cell frames furthermore provide mechanical support to the cell components and in combination with gaskets prevent leakage of the pressurized fluids (the alkaline electrolyte as well as product hydrogen and oxygen) to the environment.

The stack further comprises a compression system, which needs to ensure sufficient compression pressure on the gaskets to prevent both internal and external leakages. The compression system commonly comprises two end plates, metal tie rods, fasteners, and disc springs. The cells in the stack are assembled between a first end plate and a second end plate. The first end plate is located before the first cell and the second end plate is located after the last cell in the stack. The role of the end plates is to act as rigid bodies which distribute the compression force that is acting on them evenly over their entire face without deforming or bending through. The end plates are typically made of metal such as steel. In some alkaline electrolysis stacks, one or both of the end plates have channels penetrating the end plates in the longitudinal direction. In the context of the present disclosure, the longitudinal direction is considered to be the direction of the length of the stack, e.g. running from the center of the first cell to the center of the last cell in the stack. The role of the aforementioned channels is to feed alkaline medium into the stack and to provide means for removing a mixture of the produced gases and the alkaline medium from the stack. The end plates further comprise a plurality of longitudinal holes. The holes between the end plates are aligned, so that straight metal rods, commonly referred to as tie rods, can pass through the aligned holes of each of the end plates. The tie rods are typically at least partially threaded from both ends. Fasteners are arranged on each tie rod to mechanically connect the two end plates together. By tightening the fasteners, the end plates are pulled towards each other, and thus a compressive force is applied to the cells in the stack, in particular to the gaskets.

If the stack were always operating at room temperature and this operating temperature was held constant, the compression system would require no further components. However, alkaline stacks are operated at elevated temperatures, and thus a means of compensating for the thermal expansion of stack components is needed. In case such a means of compensation is not included, the stack which is perfectly compressed at operating temperature would lose compression when cooled down to room temperature and would potentially start leaking. One way to keep the compression at a desirable level over a range of temperatures is to employ disc springs (Belleville washers). For example, the disc springs can be arranged on tie rods between fasteners and an end plate.

In regions where atmospheric temperatures frequently fall below 0°C, it is critical to address the thermal contraction of the stack during shut-down or stand-by phases. The thermal contraction of the stack causes a significant reduction in the compression force when the stack is cooled from elevated operating temperatures to when the stack is shutdown or is on stand-by at low temperatures. This difference in compression force between the two temperatures results in sub-optimal gasket compression at lower temperatures, which may result in electrolyte leakage.

EP 4 219 394 A1 filed on 2021-07-15 by Panasonic Intellectual Property Management Co Ltd discloses a compression apparatus which includes an electrolyte membrane, an anode provided on a first principal surface of the electrolyte membrane, a cathode provided on a second principal surface of the electrolyte membrane, an anode separator provided on the anode, a cathode separator provided on the cathode, and a voltage applier that applies a voltage between the anode and the cathode. The compression apparatus causes, by using the voltage applier to apply a voltage, protons to be taken out from a hydrogen-containing gas that is supplied to the anode to move to the cathode via the electrolyte membrane and produces compressed hydrogen. The anode separator has a first flow channel through which a cooling fluid for keeping the compression unit at an appropriate temperature flow than has conventionally been the case. In EP 4 219 394 A1, the object to be compressed is a hydrogen-containing gas, not an electrolyser cell stack. The aforementioned application concerns a compression apparatus for compressing a hydrogen-containing gas by a proton-exchange membrane electrolyser, not an alkaline electrolyser, the structure and design considerations of which are substantially different from a proton-exchange membrane electrolyser.

CN 116 890 219 A filed by Jiangsu Shuangliang Hydrogen Energy Technology Co Itd on 2023-08-01 discloses a method for fastening an alkaline water electrolysis tank. A plurality of pull rods penetrates through connecting holes of the two end pressing plates. The end parts of the pull rods are connected to tension bolt stretchers which pre-tighten and clamp the electrolytic tank. A cold-tightening step is carried out after pre-tightening where all the tension bolt tensioners are symmetrically tightened. A hydraulic pump station is boosted at intervals of 5-10 MPa, then the end pressing plates are compressed. The positions of the end pressing plates and the tension bolt stretchers are locked. The end pressing plates are unlocked after the tension bolt stretcher is decompressed. The cold-tightening step is repeated, and the tension bolt stretchers are boosted again to finish the cold-tightening of the tank. A hot-tightening step is performed by carrying out a vacuum treatment on the electrolytic tank, performing external gradient heating, and tightening the end pressing plate at elevated temperatures to complete the tightening of the end pressing plate of the electrolytic tank. During vacuum treatment, the stack is evacuated, and steam is introduced to remove local air pockets and ensure uniform heating up of the stack. The aforementioned invention does not disclose details about the compression system and does not describe how the compression system is designed to ensure that the stack is sufficiently compressed under all relevant operating conditions, both in terms of temperature and pressure.

EP 4 353 873 A1 filed by John Cockerill Hydrogen Belgium on 2022-10-10 discloses a method of assembling a stack of elements. The method comprises a step of individually assembling sub-assemblies of said elements, a step of assembling the sub-assemblies together by arranging a joint between each sub-assembly to form the stack of elements, and a step of applying successive phases of heating and cooling to the stack of elements and tightening of the stack of elements between two different phases of heating and cooling. The document provides a generic method for assembling a stack of elements which can be used for a wide range of electrolysis technologies, but which is not optimal for use in pressurized alkaline electrolysis. The disclosed method is further limited to a stack design that does not include cell frames. The method furthermore does not provide information about the stack compression system that is required to ensure uniform compression of the stack and does not provide instructions regarding how to design a suitable, yet cost-efficient stack compression system.

There is still a need for an alkaline electrolyser stack that has a simple, effective, and cost-efficient design thus minimizes the number of components required for the compression of the stack, while also ensuring that compression remains constant over a wide range of operating temperatures (in particular also sub-zero temperatures) and pressures.

Furthermore, there is a need for an innovative solution to minimize the difference in compression force across temperature extremes, especially when the stack temperature falls below sub-zero temperatures, that can lead to compromised sealing and diminished stack performance.

### SUMMARY OF THE INVENTION:

The objective underlying the present invention is to provide an alkaline electrolyser stack having consistent and reliable compression across a wide range of operating temperatures and pressures, including sub-zero conditions.

Another object of the present invention is to minimize the number of components required for compressing the electrolyser stack, thus simplifying the stack design and reducing the material costs.

The above objective of the present invention is achieved by the subject-matter of the independent claims. Preferred embodiments are subject-matter of the dependent claims. The invention provides the following technical solutions:
The various embodiments of the present invention disclose a pressurized alkaline electrolyser stack, comprising: a stack core comprising a plurality of electrolysis cells , wherein each electrolysis cell comprises an anode chamber comprising an anode, a cathode chamber comprising a cathode, a diaphragm separating the anode chamber and the cathode chamber, at least one cell frame and at least one gasket. The stack core is configured to have a first stack core length *L*₁ and a first gasket stress *σ*₁ at a first design temperature *T*₁ and a second stack core length *L*₂ and a second gasket stress *σ*₂ at a second design temperature *T*₂. The first design temperature *T*₁ is at least 80 °C and the second design temperature *T₂* is less than 30 °C. A stack core length difference *dL = L₁-L₂* is from 0 mm to 20 mm, preferably from above 0 mm to 20mm, and a gasket stress difference *dσ =σ₁-σ₂* is from 0 MPa to 20 MPa, preferably from above 0 MPa to 20 MPa.

According to an embodiment of the present invention, the electrolyser stack may further comprise a compression system. The compression system may comprise a first end plate with an inner face, an outer face and *Nₜ* longitudinal holes. The compression system may comprise a second end plate with an inner face, an outer face and *Nₜ* longitudinal holes. *Nₜ* number of tie rods are preferably penetrating through the longitudinal holes of the first end plate and through the longitudinal holes the second end plate. At least *Nₜ* first fasteners are preferably located at the outer face of the first end plate, wherein preferably at least one first fastener is arranged on each tie rod. At least *Nₜ* disc spring stacks are preferably located at the outer face of the second end plate, wherein preferably each disc spring stack comprises at least one disc spring and/or is arranged on each tie rod. At least *Nₜ* second fasteners are preferably located at the end of respective disc spring stack, wherein preferably at least one second fastener is arranged on each tie rod. The number of disc springs in the disc spring stacks is preferably selected such that a total thermal travel *Δ_{Σ}* of the stack is from 0 mm to 20 mm, preferably from above 0 mm to 20 mm, and the gasket stress difference d*σ* is from 0 MPa to 20 MPa, preferably from above 0 MPa to 20 MPa.

According to an embodiment of the present invention, a maximum allowable working pressure (MAWP) of the pressurized electrolyser stack is from 10 barg to 60 barg, and preferably from 15 barg to 40 barg.

According to an embodiment of the present invention, the number of cell frames *N_{c}* in the electrolyser stack is from 100 to 1000, and preferably from 160 to 500.

According to an embodiment of the present invention, the second design temperature *T₂* is (-20 ± 5) °C.

According to an embodiment of the present invention, the first design temperature *T₁* is (90 ± 5) °C.

According to an embodiment of the present invention, each cell frame comprises an inner frame and an outer structural ring.

According to an embodiment of the present invention, the number of disc springs in each disc spring stack is configured to compensate for a stack contraction resulting from a temperature difference Δ*T* of the stack as the stack temperature decreases from the first temperature *T₁* to the second temperature *T*₂.

According to an embodiment of the present invention, a ratio of a maximum tensile strength ϑ*ₘₐₓ* of the tie rod to an applied tie rod stress *ϑ_{applied}* is higher than a safety factor *SF*, wherein the safety factor *SF* is in the range from 4 to 8, and preferably from 4 to 5.

According to an embodiment of the present invention, the first gasket stress *σ₁* and the second gasket stress σ*₂* is greater than 0 MPa.

According to an embodiment of the present invention, each disc spring stack comprises from 2 to 30 disc springs, and preferably from 2 to 20 disc springs.

According to an embodiment of the present invention, the number of tie rods *N*ₜ is from 8 to 30, preferably from 10 to 20.

According to an embodiment of the present invention, the disc spring stack comprises a guide component, wherein preferably the guide component comprises an inner cylinder between the tie rod and an inner ring of the disc spring; and preferably an outer sleeve covering an outer surface of the disc spring.

According to an embodiment of the present invention, the electrolyser stack is mounted on a skid structure, wherein preferably the skid structure comprises a plurality of sliders supporting the end plates of the stack, wherein preferably the sliders are configured accommodate the stack core length difference *dL.*

According to an embodiment of the present invention, the number of tie rods *Nt* is 12, preferably the first design temperature *T₁* is (90 ± 5) °C and the second design temperature *T₂* is (-20 ± 5) °C, preferably the number of cell frames *N_{c}* is 240, and preferably the stack core length difference *dL* is from 8 mm to 14 mm, and preferably the gasket stress difference *dσ* is from 14 MPa to 17 MPa.

According to an embodiment of the present invention, the preferred electrolyser stack is used in an electrolyser system for performing electrolysis of water in a liquid alkaline medium.

These and other aspects of the embodiments herein will be better appreciated and understood when considered in conjunction with the following description and the accompanying drawings.

### BRIEF DESCRIPTION OF THE DRAWINGS:

The summary above, as well as the following detailed description of illustrative embodiments, is better understood when read in conjunction with the appended drawings. For the purpose of illustrating the present invention, exemplary constructions of the embodiments of the invention are shown in the drawings, with references to the following diagrams wherein:
Fig. 1A is a lateral view of a stack core, comprising a plurality of cells, and a compression system of an alkaline electrolyser stack, according to an embodiment of the present invention.
Fig. 1B is a front and back view of the compression system of the electrolyser stack, according to an embodiment of the present invention.
Fig. 1C is a lateral view of the compression system of the electrolyser stack, according to an embodiment of the present invention.
Fig. 1D is a lateral view of the electrolyser stack comprising the stack core, the compression system and a skid structure, according to an embodiment of the present invention.
Fig. 1E is a top view of the skid structure of the electrolyser stack, according to an embodiment of the present invention.
Fig. 2A is a frontal view of an electrolyser cell, according to an embodiment of the present invention.
Fig. 2B is a cross-sectional view of the electrolyser cell, according to an embodiment of the present invention.
Fig. 2C is a cross-sectional view of a cell frame, according to an embodiment of the present invention.
Fig. 3A is a lateral view of a disc spring stack comprising a plurality of disc springs arranged in parallel, according to an embodiment of the present invention.
Fig. 3B is a lateral view of the disc spring stack comprising the plurality of disc springs arranged in series, according to an embodiment of the present invention.
Fig. 3C is a lateral view of the disc spring stack comprising four disc spring packets arranged in series, each packet comprising two parallel disc springs, according to an embodiment of the present invention.
Fig. 3D is a lateral view of the disc spring stack comprising two disc spring packets arranged in series, each packet comprising four parallel disc springs, according to an embodiment of the present invention.
Fig. 3E is a three-dimensional view of an outer sleeve of a guide component covering the disc spring stack, according to an embodiment of the present invention.
Fig. 3F is a three-dimensional view of an inner cylinder of the guide component, according to an embodiment of the present invention.
Fig. 3G is a cross-sectional view of the disc spring stack along with the guide component, according to an embodiment of the present invention.
Fig. 4 is a view of the electrolyser stack showing stack core lengths *L*₁ and *L*₂ at a first design temperature *T*₁ and a second design temperature *T*₂, according to an embodiment of the present invention.
Fig. 5 is a graph plot showing a relation between the leak rate of a gasket to the gasket stress at a predefined pressure and temperature.
Fig. 6 is a cross-sectional view of an individual disc spring indicating various dimensions of the disc spring, according to an embodiment of the present invention.
Fig. 7 shows Table 1: Tightness classes.
Fig. 8A shows Table 2: Relation between disc springs and gasket stress of Example 1.
Fig. 8B shows Table 3: Relation between disc springs and the total thermal of the stack components of Example 1.
Fig. 9A shows Table 4: Relation between disc springs and gasket stress of Example 2.
Fig. 9B shows Table 5: Relation between disc springs and the total thermal of the stack components of Example 2.

### DETAILED DESCRIPTION OF THE DRAWINGS:

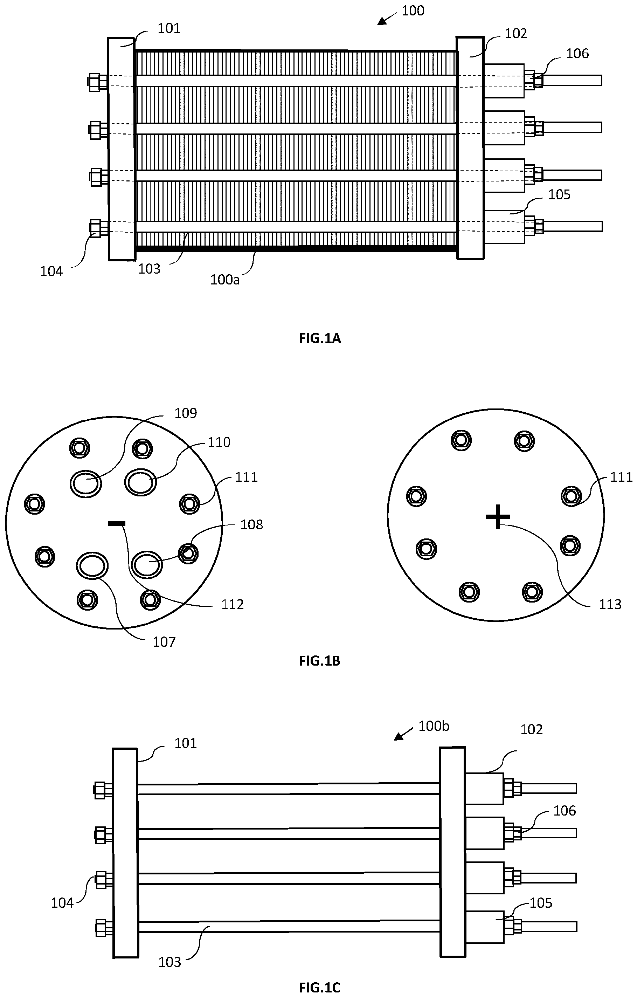

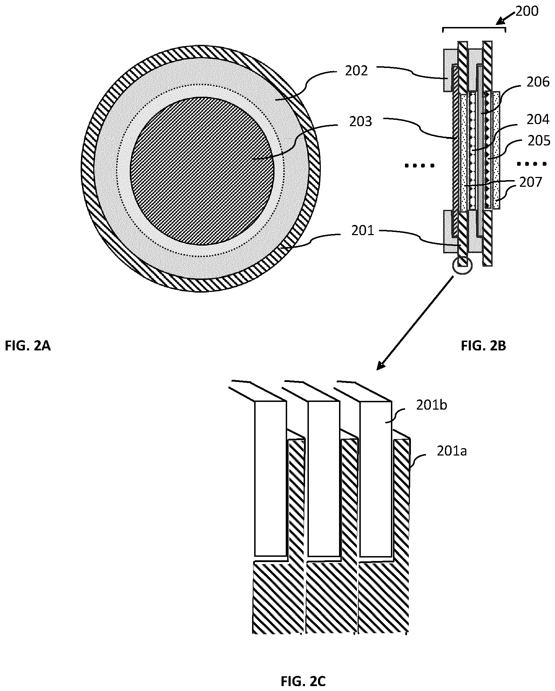

The various embodiments of the present invention disclose an electrolyser stack, in particular a pressurized alkaline electrolyser stack 100, as seen in Fig. 1A for electrochemically splitting water and generating hydrogen and oxygen gases in a liquid alkaline media. The electrolyser stack 100 comprises a plurality of electrolysis cells stacked in series, herein referred to as a stack core 100a. The stack 100 further comprises a compression system 100b, as shown in Fig 1C, the compression system 100b is configured to compress the plurality of cells together to achieve consistent physical contact between the cell components and prevent leakage of electrolyte and gases between the cells or to the outside of the stack. Fig. 2A and 2B provide a view of an electrolysis cell 200, wherein each electrolysis cell 200 in the electrolyser stack 100 comprises an anode chamber and a cathode chamber. The electrolysis cell 200 further comprises two electrodes, wherein the anode chamber further comprises an anode 204 and the cathode chamber comprises a cathode 205, these two electrodes are placed on either side of a diaphragm 206, a bipolar plate 203 placed between the electrolysis cells, and at least two spacers 207 placed next to the electrodes, at least one on either side of electrode-diaphragm-electrode assembly. The positioning of the electrodes close to the diaphragm is achieved by applying compression via the spacers.

Fig. 2B is a lateral view of the electrolysis cell 200, according to an embodiment of the present invention. Each electrolysis cell 200 further comprises two cell frames 201: an anode cell frame used at the anode chamber and a cathode cell frame used at the cathode chamber. The cell frames 201 provide mechanical support to the individual electrolysis cells 200, maintaining proper alignment and spacing between the electrodes, the diaphragm 206, the bipolar plate 203 and the spacers 207. The cell frame 201 comprises a central opening which accommodates other cell components. At least one inlet channel and two outlet channels transverse through the cell frame 201 in longitudinal direction for supplying an electrolyte to the electrolysis cells and for transporting the gases generated in the electrolysis cells during electrolysis. Referring to Fig. 1B, the stack preferably has an anolyte inlet channel 107 for supplying the electrolyte to the anode chamber of the cells and a catholyte inlet channel 108 for supplying the electrolyte to the cathode chamber of the cells. The two outlet channels 109 and 110 transport the oxygen gas and hydrogen gas produced in the corresponding anode chamber and cathode chamber of the cells to a corresponding gas purification unit. The channels are connected to the central opening of each cell frame 201 by a plurality of pathways, the electrolyte and the gases are transferred to/from the central opening and the channels via the pathways.

The cell frame 201 is primarily made of plastic materials including, but not limiting to, polyetheretherketone, polysulfone, acetal copolymer, polyethersulfone, polyphenylene, polyphenylene sulfide, polyphenylene oxide, polybenzimidazole, polyethyleneimine, polyamide-imides and other plastic polymers. The cell frame 201 material can have fillers such as fibers, polyphenylene oxide and other suitable materials to provide additional strength and temperature tolerance. However, the cell frame 201 can be made of metals, ceramics and other materials, and their combination thereof, with appropriate mechanical strength, thermal tolerance, electrically insulating properties and chemical resistance to withstand alkaline environment.

According to one embodiment of the present invention, the cell frame 201 further comprises an inner frame 201a and an outer structural ring 201b as shown in Fig. 2C. The structural ring is located at the periphery of the inner frame, providing strength and rigidity to the outer layer of the stack core 100a. The structural ring is made of more rigid material than the inner frame, for example: the inner frame 201a is made of one or more combination of plastic materials, and the structural ring 201b is made of metal, however both components can be made of the same material.

The stack components are sealed together with the help of gaskets 202. Each electrolysis cell 200 comprises at least two gaskets 202, a first gasket placed between the anode cell frame and a cathode cell frame, and a second gasket placed between the cathode cell frame and the anode cell frame from an adjacent cell frame. As seen in Fig. 2B, the bipolar plate 203 is held between the anode cell frame and the first gasket, and the diaphragm is held between the cathode cell frame and the second gasket. During compression of the electrolyser stack 100, the gaskets 202 must deform appropriately to fill gaps between the cell frames 201 and the gaskets 202 and create liquid- and gas-tight seals. Too little compression can result in leakage of gases (hydrogen and oxygen) or electrolyte, thus compromising the performance and safety of the electrolyser stack 100. On the other hand, excessive compression could damage the gaskets 202, lead to material degradation, or cause deformation of other stack components, reducing their lifespan.

The gasket 202 is made up of materials including, but not limited to Polytetrafluoroethylene (PTFE), expanded PTFE, vulcanized or peroxide-crosslinked ethylene-propylene-diene rubber (EPDM) or ethylene-propylene rubber (EPM), fluorine kautschuk material (FKM), nitrile butadiene rubber, tetrafluoroethylene-perfluoroalkyl vinyl ether copolymer (PFA). The gasket 202 materials may optionally comprise a filler material, such as glass fibers.

Referring to both Fig. 1A and 1C, the compression system 100b of the electrolyser stack 100 comprises a first end plate 101, a second end plate 102, each end plate comprises a plurality of longitudinal holes. The stack core 100a is placed between the end plates 101 and 102. The end plates 101 and 102 may serve as negative terminal 112 and positive terminal 113, respectively, to which DC power is supplied (as shown in Fig. 1B) and, in this case, the end plates 101 and 102 play the role of electrical conductor and current distributor. In other cases, only one of the end plates 101 or 102 serves as a terminal, and the other terminal is not an end plate. The electrolysis cells 200 are arranged between an inner face of the first end plate 101 and an inner face of the second end plate 102, with the electrolysis cells 200 enclosed around the perimeter by a plurality of tie rods 103.

The tie rods 103, each of them shaped like a rod, are inserted in parallel to each other, through the first end plate 101 and the second end plate 102 through a plurality of longitudinal holes 111 in the end plates 101 and 102, with a first end of each tie rod 103 penetrating out of an outer face of the first end plate 101 and a second end of each tie rod 103 penetrating out of an outer face of the second end plate 102. Tie rods 103 are typically threaded at both ends up to a certain distance.

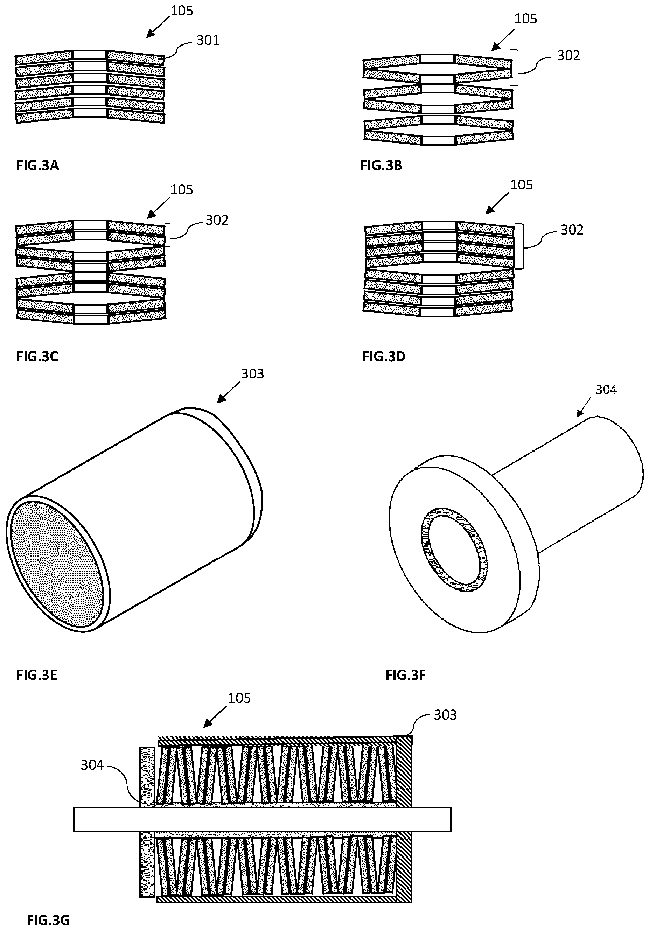

To accommodate the thermal expansion and contraction of the stack components, a plurality of disc spring stacks 105 is incorporated into the compression system 100b. Referring to Fig 3A, each disc spring stack 105 comprises at least one disc spring 301, and at least one disc spring stack 105 is sleeved on the second end of each tie rod 103 at the outer face of the second end plate 102. Optionally the disc spring stacks 105 are also integrated on the first end of the tie rod 103 at the outer face of the first end plate 101.

Referring to Fig. 3, the disc springs 301 are shallow conical rings that are subjected to axial loads. Normally the ring thickness is constant, and the applied load is evenly distributed over the upper inside and lower outside edges. To achieve the desired force-deflection characteristic, the disc springs 301 are stacked in different arrangements as shown in Fig. 3A-3D. A group of individual disc springs 301 stacked facing the same way is called a parallel spring stack (Fig. 3A). A group of individual disc springs 301 or parallel spring stacks that are stacked facing alternate ways is called a series spring stack (Fig. 3B). In a parallel spring stack, the deflection of the stack is equal to that of the individual spring. The load at a given deflection is proportional to the number of individual springs in the stack. In a series spring stack, the deflection of the disc spring stack 105 is the sum of the deflections of the individual springs. The load of the disc spring stack 105 is equal to the load on the individual spring. Furthermore, a combination of one or more packet(s) 302 of parallel and/or series disc springs 301 arranged in parallel or series can also form the disc spring stack 105. Fig. 3C is a lateral view of the disc spring stack 105 comprising four disc spring packets 302 arranged in series, each packet 302 comprising two parallel disc springs 301. Fig. 3D is a lateral view of the disc spring stack 105 comprising two disc spring packets 302 arranged in series, each packet 302 comprising four parallel disc springs 301.

The disc spring stack 105 further comprises a guide component 303 to lock the disc springs 301 in place and ensure alignment. As shown in Fig. 3E and 3F, the guide component is made of two sub-components: an outer sleeve 303a covering an outer surface of the disc spring stack 105 and a washer 303b surrounding the tie rod 103 fitting between the tie rod 103 and an outer ring of the disc spring 301 used at the end of the disk spring stack 105, the washer 303b is located between the disc springs 105 and the second fasteners 106. The guide component 303 compensates for the variations in the size and design of the disc springs 301 (shown in Fig. 3G). Optionally, the guide component 303 can comprise a inner cylinder, placed between the tie rod and the inner surface of the disc spring stack.

The disc springs 301 are primarily composed of high-grade steel, for example steel with a Young's modulus of 206,000 N/mm². The standard materials used are Ck6₇ (DIN 1.1231), 50CrV₄ (DIN 1.8159) and 51CrMoV4 (DIN 1.7701). However, based on different requirements, disc springs 301 made up of copper alloy or nickel alloy can be used. For example: X₁₂ CrNi₁₇₇ (DIN 1.4310), X₇ CrNiAl₁₇₇ (DIN 1.4568) and X₅ Cr Ni Mo_{18 10} (DIN 1.4401) are used for their corrosion resistance properties, X₃₅ CrMo₁₇ (DIN 1.4122) and X₂₂ CrMoV₁₂₁ (DIN 1.4923) are thermally stable materials that can be exposed to high temperatures; CuBe₂ (DIN 2.1247) and NiBe₂ (DIN 2.4132) are both anti-magnetic and corrosion resistant. The disc springs 301 can be coated with corrosion protection layer using methods such as, but not limited to, phosphate coating, galvanizing, nickel plating, zinc plating etc. Apart from conventional disc springs 301, various other disc spring types such as, but not limited to, internally or externally slotted disc springs, wave disc springs etc. can be used for the compression.

The compression system 100b further comprises a plurality of first fasteners 104 placed at the outer face of the first end plate 101, with at least one first fastener 104 placed on each tie rod 103. If disc spring stacks 105 are used at the first end plate 101, the first fasteners 104 are placed at the first end of the tie rods 103 and the disc spring stacks 105 are placed between the first fasteners 104 and the first end plate 101.

A plurality of second fasteners 106 are located near the second end of the tie rods 103, the second fasteners 106 are placed after the disc spring stacks 105, wherein at least one second fastener 106 is threaded on each tie rod 103. Uniform force is applied to each tie rod 103 by symmetrically tightening the first fasteners 104 and the second fasteners 106 to ensure that the compression force is evenly distributed across the entire surface area of the stack. Preferably, the fasteners are all grouped together in groups, each group is tightened one after the other and the fasteners within the same group are tightened simultaneously. The fasteners constrain the two end plates 101 and 102 and the stack components between the plates and compress the plurality of electrolysis cells 200 between them.

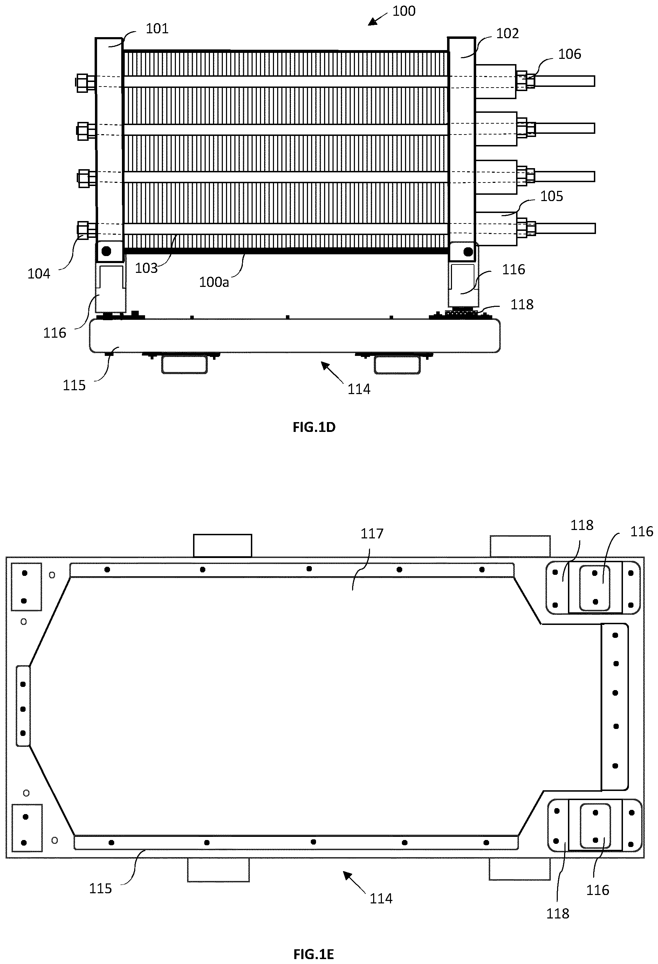

Once assembled, the stack is transferred onto a skid structure 114 shown in Fig. 1D and 1E. Fig 1E demonstrates the top view of the skid structure 114. The skid structure 114 comprises a main frame 115, a plurality of footing structures 116, an integrated drip tray 117 and a plurality of sliders 118. The main frame 115 serves as a structural backbone supporting the stack, enabling stability and safe installation of the stack. The footing structures 116 are placed at four corners of the main frame 115, to ensure proper alignment and load distribution during mounting of the stack on the skid structure 114. The stack is placed on the footing structures 116, the footing structures 116 providing the interface between the stack's end plates 101 and 102 and the skid structure 114. The drip tray 117, composed of a corrosion-resistant material, is designed to collect and contain the liquids that may leak from the stack, thus preventing contamination of the environment and reducing any damage to the stack or the equipment surrounding the stack. Located between the footing structure 116 and the main frame 115, the sliders 118 are configured to accommodate the change in stack core length during thermal expansion and contraction of the stack during the operating and shutdown phases.

The design of the electrolyser stack 100 and the choice of materials for the components of the electrolyser stack 100 such as the cell frames 201, the gaskets 202, the electrodes and the diaphragms can impact on how compression is applied and distributed. For example, using materials with appropriate elasticity or resilience helps to maintain the pressure without excessive tightening. Additionally, the thickness and rigidity of each component are carefully considered to ensure that the applied compression results in uniform pressure distribution over the entire stack without causing mechanical damage to the components.

The cell frames 201 and the gaskets 202 behave in different ways during an operating phase and a shutdown phase or a standby phase or a cold start-up phase of the electrolyser stack 100. The plurality of cells 200 are compressed between the first end plate 101 and the second end plate 102 by the compression system 100b. During the operating phase of the electrolyser stack 100, the stack temperature is high, causing thermal expansion of the components. As a result, the compression force applied to the stack core 100a increases as the temperature increases. When the electrolyser stack 100 is cooler, such as in shutdown or standby or cold start-up phase conditions, the stack core 100a contracts, thereby decreasing the compression force.

Conventionally, the temperature of the electrolyser stack 100 can vary from 20 °C during the shutdown phase, to 90 °C during the operating phase. However, in regions with temperatures below 0 °C, the stack temperature can reach down to -20 °C. The cell frames 201 and the gaskets 202 must be designed to incorporate the compression force changes when the temperature range of the stack between a lowest design temperature and a highest design temperature is as high as 110 °C.

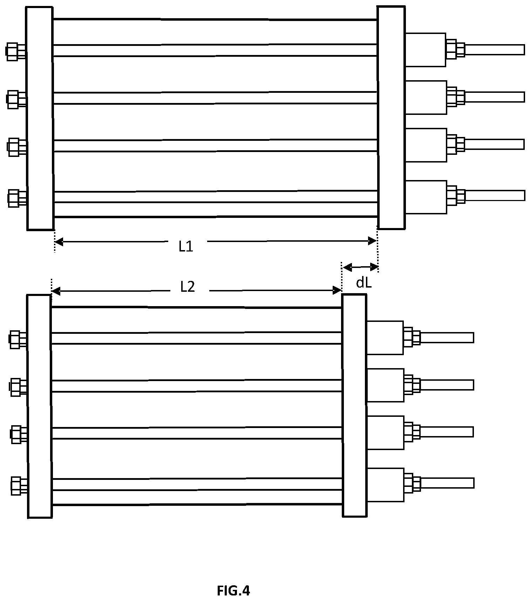

Referring to Fig. 4, the stack core 100a is configured to have a first stack core length *L₁* at a first design temperature *T₁*. The length of the stack core 100a is measured from the inner face of the first end plate 101 and the inner face of the second end plate 102. The first stack core length *L₁* is considered when the electrolyser stack 100 is in the operating phase and the first design temperature *T₁* of the electrolyser stack 100 is the highest design temperature of the stack 100 when the stack is operating. The stack core 100a is further configured to have a second stack core length *L*₂ at a second design temperature *T*₂. The electrolyser stack 100 is at the second design temperature *T₂* when the electrolyser stack 100 is in the shutdown/standby/cold start-up phase co., the electrolyser stack 100 has cooled to the second design temperature *T₂* and the length of the stack core 100a has reduced to the second stack core length *L₂*. During the operating phase, the first design temperature *T₁* is at least 80 °C and during the shutdown phase, the second design temperature *T₂* is less than 30 °C. Fig. 4 is a view of the electrolyser stack 100 showing stack core lengths *L₁* and *L*₂ at design temperatures *T₁* and *T*₂, respectively.

The thermal expansion of the cell frame 201 needs to be accounted for when estimating the compression force that the stack core 100a is subjected to. The combined thermal expansion of all the cell frames 201 in the electrolyser stack 100, Δ*₁* expressed in millimeters, is calculated using equation (1): ${Δ}_{1} = {t}_{c} ∗ Δ T ∗ {N}_{c} ∗ {s}_{c}$ where *t_{c}* is the thickness of a single cell frame 201 in mm, *N_{c}* is number of cell frames 201 used in the electrolyser stack 100, Δ*T* is a temperature difference of the electrolyser stack 100 i.e. the difference between the first design temperature *T₁* and the second design temperature *T₂* attained by the electrolyser stack 100, Δ*T* is expressed in °C, and *s*_{c} is coefficient of thermal expansion of cell frames 201 measured in 1/°C. The cell frames materials with a low coefficient of thermal expansion are preferred to avoid large changes in compression force due to temperature fluctuations. The number of cell frames 201 *N_{c}* in the electrolyser stack 100 is preferably between 50 and 1000, and desirably between 160 and 500.

The combined thermal expansion of all the gaskets 202 in the electrolyser stack 100, Δ₂, expressed in millimeters, is calculated using equation (2): ${Δ}_{2} = {t}_{g} ∗ Δ T ∗ {N}_{g} ∗ {s}_{g}$ where *t*_{g} is thickness of a single gasket 202 expressed in mm, *N*_{g} is number of gaskets 202 used in the electrolyser stack 100, and *s*_{g} is coefficient of thermal expansion of gaskets 202, measured in 1/°C.

The thermal expansion of the tie rods 103 in the electrolyser stack 100, Δ*₃*, expressed in millimeters, is calculated using equation (3): ${Δ}_{3} = l ∗ Δ T ∗ {s}_{t}$ where / is a loaded length of the tie rod 103 representing the length of a section of the tie rod 103 that is under a tensile stress, i.e. the section on which the stack components are mounted. The loaded length *l*, expressed in millimeters, is the distance between the first fasteners 104 and the second fasteners 106. *s*ₜ is the coefficient of thermal expansion of tie rod 103, measured in 1/°C.

Furthermore, the elongation of the tie rod 103 due to the combined effect of tensile forces and stack temperature changes, expressed in millimeters, is calculated using equation (4): ${Δ}_{4} = \frac{\left({ϑ}_{1}-{ϑ}_{2}\right)}{E} ∗ l$ where *θ₁* is an applied tie rod stress at the first design temperature *T₁* and *θ₂* is an applied tie rod stress at the second stack design temperature *T*₂, *E* is Young's modulus of the tie rod, / is the loaded length of the tie rod 103. The parameters *θ₁* and *θ₂* are expressed in units of MPa, Young's modulus in units of MPa and / in millimeters. The applied tie rod stress *θ_{applied}* is the tensile stress that the loaded length of the tie rod 103 is exposed to at a given temperature. The applied stress is dependent on the force that is applied to the stack core 100a by the compression system 100b by the disc springs 301 and the force resulting from stack pressure *P.* The applied tie rod stress *θ_{applied}* measured in MPa is given as : ${ϑ}_{applied} = \frac{{F}_{disc} + {F}_{int}}{D}$ wherein *F_{disc}* is force from disc springs 301 acting on each tie rod 103, *Fᵢₙₜ* is force resulting from internal stack pressure *P* per tie rod 103 and *D* is cross-sectional area of the tie rod 103. The number of tie rods 103 *Nₜ* is between 4 and 30, preferably between 10 and 20.

The tie rod 103 is defined by a maximum tensile strength *θₘₐₓ* which is the maximum stress that can be applied on the tie rod 103 before it breaks or factures under tension. The maximum tensile strength *θ*ₘₐₓ depends on the properties of the tie rod material. For example, mild steel has a *θ*ₘₐₓ of approximately 400 MPa, while stainless steel can have *θ*ₘₐₓ above 600 MPa. A safety factor *(SF)* of the tie rod 103 used in the electrolyser is calculated to measure how much stronger the tie rod 103 needs to be compared to the applied tie rod stress *θ_{applied}.* The safety factor is calculated using equation (6). $SF = \frac{{ϑ}_{max}}{{ϑ}_{applied}}$

According to an embodiment of the present invention, to ensure tie rods 103 do not break under extreme loads, a ratio between the maximum tensile strength of the tie rod 103 and the applied tie rod stress needs to be higher than the safety factor. Since the electrolyser stack 100 works on higher loads, the safety factor considered in the present invention is in a range between 4 and 8, preferably between 4 and 5.

In order to enable safe working of the pressurized alkaline electrolysis stack 100, the stack has a maximum allowable working pressure (MAWP), which is the highest pressure that the stack 100 can endure during its operation without compromising its structural integrity or safety. The maximum allowable working pressure (MAWP) of the pressurized electrolyser stack 100 is between 10 barg and 60 barg, and preferably between 15 barg and 40 barg.

With A representing the surface area of the central opening of the cell frame 201 where the stack pressure is applied and which is expressed in mm², *Fᵢₙₜ* is given by equation (7): ${F}_{int} = \frac{P ∗ A}{{N}_{t}}$

A total thermal travel (*Δ_{Σ}*) of the stack 100, expressed in millimeters, estimates how much the cell frames 201, gaskets 202, and tie rods 103 will expand or compress and how much the elongation of tie rods 103 due to change in the applied tie rod stress compensates for this expansion. The total thermal travel of the stack 100 is calculated according to equation (8): ${Δ}_{Σ} = {Δ}_{1} + {Δ}_{2} + {Δ}_{3} - {Δ}_{4}$

Under conditions where the stack core is compressed using the fasteners and tie rods, but without disc springs, a stack core length difference *dL* at the temperatures *T*₁ and *T₂* given as *dL = L*₁*-L*₂ is equal to the thermal travel *Δ_{Σ}*. The stack core length difference *dL* is estimated based on the thermal travel *Δ_{Σ}*, such that *Δ_{Σ}* is between 0 to 20 millimeters. The number of disc springs are selected such that the stack core length difference *dL* within the required range is achieved. Each disc spring stack 105 comprises between 2 to 30 disc springs 301, and preferably between 2 to 20 disc springs 301.

According to the invention, the stack core length difference *dL* is between 0 to 20 millimeters. Limiting *dL* to below 20 mm is advantageous for several reasons. First, it is easier to mechanically incorporate the stack according to the present invention with the rest of the electrolyser system (often referred to as a Balance of Plant), it is in particular easier to connect the stack 100 mechanically and fluidically to the inlet channels 107, 108 and the outlet channels 109, 110, as well as electrically to the negative DC terminal 112 and the positive DC terminal 113 of the stack 100 to that of the rectifier. For example, for pressurized alkaline electrolyser stacks, the inlet channels 107, 108 and the outlet channels 109, 110 are typically made of rigid metal piping. In case the stack dimensional changes, i.e. *dL,* exceeds 20 mm, ensuring the mechanical integrity of the aforementioned rigid metal piping connections is difficult and expensive. Furthermore, the electrical cables that connect each end plate of the stack 100 to the positive and negative terminals of the rectifier are also rigid and excessive changes in stack dimensions d*L* are not easy to accommodate. The latter problem is exacerbated in case electrical cables are replaced with even more rigid metallic bus bars (a cheaper solution compared to cables). Another advantage of having the stack core length difference *dL* between 0 and 20 mm is related to the skid structure 114 that is commonly placed underneath the electrolyser stack 100. The sliders used on the skid structure are used to compensate for the stack core length difference *dL,* when the stack experiences thermal expansion or contraction. In case, *dL* is limited to a narrow range (between 0 and 20 mm), the skid design can be simplified, e.g. one end of the skid structure 114 can be bolted to the floor, while the slider can be implemented on other end to accommodate small movements due to Δ*T.* The stack core length difference *dL* larger than 20 mm would increase the complexity and the cost of the skid structure 114.

The gaskets 202 need to be subjected to a specific gasket stress to prevent a leakage of the electrolyte and the generated gases within and outside the stack 100. The sealing capability of the gasket is defined by a leak rate. The leak rate is a function of the gasket stress, a pressure difference between the two sides of the gasket, the operating temperatures and the gas that needs to be sealed within the stack 100. The leak rate decreases as the gasket stress increases, thus increasing the sealing ability of the gasket. However, the leak rate increases as the pressure difference and the operating temperature increases. The leak rates of the gasket can be determined using various well-established procedures, such as the cyclic compression and relaxation tests specified in EN 13555 standard, developed by the European Committee for Standardization (CEN).

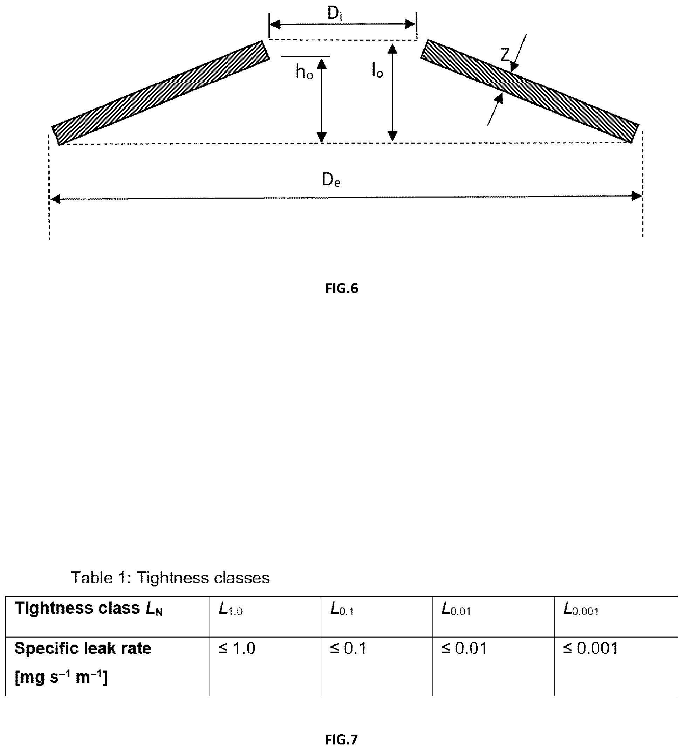

The gasket 202 with an allowable leak rate is characterized by a tightness class *L_{N}*. For the maximum allowable leak rate, the gasket of the corresponding tightness class *L_{N}* is selected from Table 1, which is shown in Fig. 7. In order to achieve the desired tightness class, the gasket 202 needs to be sufficiently compressed, therefore the gasket needs to be subjected to a minimum gasket stress.

Based on the operating conditions of the stack 100, the tightness class *L_{N}* of the gasket is, for example, *L*_{0.01}. The gasket stress required to attain the tightness class *L*_{N} is *σ_{R}.* The required gasket stress *σ*_{R} is achieved by applying an effective compression force *F*_{Σ} on the gaskets 202 using the compression system 100b. For example, the compressive force *F*_{Σ} can be applied on the end plates 101 and 102 and the tie rods 103 by tightening the first fasteners 104 and the second fasteners 106. The required gasket stress *σ_{R},* i.e. the gasket stress which is required to reach sufficient gasket tightness class, is calculated using equation (9): ${σ}_{R} = \frac{{F}_{Σ}}{S}$ wherein S is the surface area of a single gasket 202.

The aforementioned compression force *F*_{Σ} can be applied directly onto the cell frames 201 and the gaskets 202, but it is mechanically more advantageous to apply the compression force onto end plates 101, 102, which then transfer the force to the cell frames 201 and the gaskets 202. The compression force applied to the stack is estimated by following equation: ${F}_{Σ} = F - P ∗ A = {F}_{disc} ∗ {N}_{t} - {F}_{int} ∗ {N}_{t}$

*F* is a combined tie rod compression force (of all tie rods) in Newtons, *P* is internal pressure of the stack 100 measured in MPa, *A* is an area of the central opening of the cell frame 201 in mm². The tie rods 103 are subjected to compression force coming from the disc springs, *F_{disc}.* The sum of the disc spring forces *F_{disc}* exerted on each tie rod 103 is equal to the combined tie rod compression force *F*, which is calculated by multiplying the applied tie rod stress by the cross-sectional area of the tie rod *D.* The compression force can be adjusted by varying the number of tie rods *Nₜ* that are used in the compression system 100b, as well as by varying the force applied via each tie rod *F_{disc}.* On the other hand, in case the stack 100 is pressurized, the internal pressure *P* inside the cell will counteract the compression force applied on the gaskets 202 and will try to push the cell frames 201 apart.

The number of disc springs 301 and the arrangement of placing the disc spring in series and/or parallel in the disc spring stack 105 is designed to account for the thermal expansion and contraction of the electrolyser stack 100. The compression system 100b of the electrolyser stack is configured such that the maximum compression force is achieved when the electrolyser stack 100 is in the operating phase, i.e. at the first design temperature *T₁*. The disc spring stacks 105 located on the tie rods 103 are configured to increase the compression force *F_{disc}* as the electrolyser stack 100 heats up to the first design temperature *T₁* and expands to the first stack core length *L₁*, thereby achieving the designed gasket stress and ensuring the required leak-tightness of the electrolyser stack 100. When the stack 100 is in shutdown/standby phase, as the stack cools down to the second design temperature T2, and reaches the second stack core length *L₂*, the disc spring stacks 105 exert relatively low compression force *F_{disc}* sufficient enough to ensure stack tightness and maintain adequate gasket stress to prevent any leakage.

The electrolyser stack 100 is commonly configured to have a first gasket stress σ₁ during the operating phase of the stack 100, i.e. at the first design temperature *T*₁. In order to maintain the required tightness class of the stack during its operating phase, the first gasket stress *σ*₁ needs to be same as the required gasket stress, i.e. it is desirable that σ₁ = σ_{R}. For a given combined tie rod compression force *F*₁ at the first design temperature *T₁*, the effective compression force *F*_{Σ*1*} is given by equation (11): ${F}_{Σ 1} = {F}_{1} - P ∗ A$

Therefore, the first gasket stress *σ*₁ is calculated using equation (12): ${σ}_{1} = \frac{{F}_{1} - P ∗ A}{S}$

*F*₁ is equal to the applied tie rod stress *θ₁* multiplied by the cross-sectional area of the tie rod *D.*

When the electrolyser stack 100 is cooled down to the second temperature *T₂* during standby phase or shut-down phase, the stack is required to retain its tightness class. The electrolyser stack 100 is further configured to have a second gasket stress σ*₂* at the second temperature *T*₂, at the internal pressure of the stack *P*. The second gasket stress σ*₂* is calculated using equation (13): ${σ}_{2} = \frac{{F}_{2} - P ∗ A}{S}$

Herein, *F₂* is the compression force provided by the tie rods 103 at temperature *T₂* and *F*₂ is equal to the applied tie rod stress *θ*₂ multiplied by the cross-sectional area of the tie rod *D.*

According to the present invention, a gasket stress difference *dσ=σ*₁*-σ*₂ is required to be between 0 and 20 MPa. Having the gasket stress difference *dσ* in the range between 0 and 20 MPa is advantageous, because it ensures a sufficiently low leak rate from each gasket 202 during operation and during stand-by/shutdown conditions. If *dσ* is negative, then the gasket would be compressed more when exposed to lower temperature, thereby potentially leading to excessive plastic deformation and over-compression of the gasket. If d*σ* was larger than 20 MPa, then the gasket stress at lower temperature would decrease too much and lead to potential leakages, as explained below.

Furthermore, the first gasket stress σ₁ and the second gasket stress σ₂ need to be greater than 0, according to an embodiment of the present invention. The gasket stress is negative when the internal pressure P exerting the internal force *Fᵢₙₜ* is higher than the force provided by the disc springs *F_{disc}.* This situation creates tension on gaskets, resulting in leakage of the gaskets.

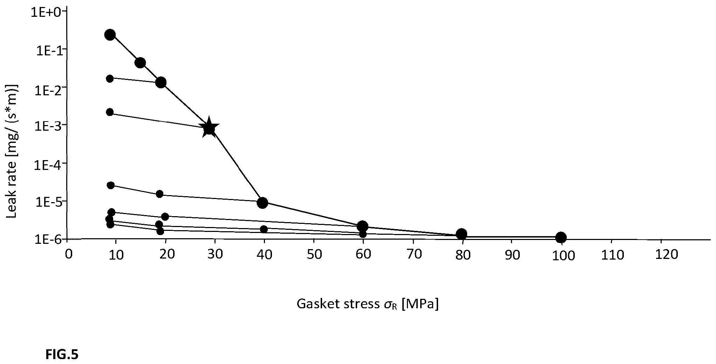

A relation between the leak rate in mg/(s*m) and the gasket stress in MPa for a temperature 23±5 °C and an internal gas pressure of 10 bar for one potential gasket material is shown in Fig. 5. The thick line is the loading curve, the thin line is the unloading curve, dots on the curves represent gasket stress and the corresponding leakage point. The star point shows *σ*_{R} = *σ*₁*,* representing the required gasket stress during required during the operation of the electrolyser stack 100 to comply with the allowable leak rate (e.g., on Fig. 5, 0.001 mg/(s*m) and the tightness class (e.g., on Fig. 5, *L*_{0.001}) selected for the gasket. The graph shows the amount of gasket stress that remains on the gasket after the gasket has undergone relaxation after being exposed to a higher gasket stress. For example, tightness class *L*_{0.001} can be achieved for the gasket shown on Fig. 5 by first applying a gasket stress of 30 MPa to the gasket. The gasket retains much of its sealing ability, even after the gasket stress is subsequently decreased to 10 MPa (i.e. d*σ*= 20 MPa): the leakage rate increases slightly to approximately 0.002 mg/(s*m). A further decrease in gasket stress will result in significantly higher leakage rates.

For a known number of tie rods 103, *Nₜ,* the disc spring force *F_{disc}* depends on the various dimensions of the disc springs 301, the number of disc spring stacks 105 and the number of disc springs 301 in each disc spring packet 302 arranged in parallel or series. As shown in Fig. 6, the dimensions of the disc spring 301 include an outer diameter of the disc spring *D*ₑ, an inner diameter of the disc spring *D*ᵢ, a thickness of the disc spring *Z*, a cone height of an unloaded disc spring *h*ₒ, a height of an unloaded disc spring *l*ₒ.

To maintain the gasket stress difference d*σ* between 0 to 20 MPa; the thermal travel Δ_{Σ} and the stack core length difference *dL* less than 20 millimeters, the tie rod compression forces *F₁* and *F₂* need to be estimated. Furthermore, according to the European Pressure Equipment Directive and similar equivalent regulations elsewhere, a yield strength and a maximum tensile strength of any pressure-bearing devices (for example tie rods herein) need to be designed with a safety factor, SF. In case the safety factor is less than the recommended value, the components can no longer be certified for use under PED regulation. The safety factor for the tie rods 103 used in the electrolyser stack 100 is 4. Based on the safety factor of the tie rods 103 and the selection of a particular type of disc spring 301 based on the preferred dimensions and other specifications, such as material of the disc spring 301, its theoretical characteristic load curve etc., the number of springs and their arrangement in the disc spring stack 105 is varied and adjusted to ensure the required forces *F₁* and *F₂* are attained to maintain the gasket stress difference d*σ* within 0 to 20 MPa and the stack core length difference *dL.* The process for selecting the number of disc springs 301 and their arrangement in the disc spring stacks 105 to meet the requirements of the present invention is explained below with two examples.

### Example 1:

The electrolyser stack 100 considered for Example 1 has 120 electrolysis cells 200 and 12 tie rods 103, *N*ₜ=12. The surface area of each individual stack component as listed: area of the cell frame's central opening A= 387000 mm², surface area of a single gasket S = 111675 mm². The disc spring considered in this example is made of spring steel DIN 1.8159 (51CrV₄), the disc spring 301 with following dimensions: *D*ₑ = 160 mm, *D*ᵢ = 82 mm, Z= 11mm, *l*ₒ= 14.50 mm is selected to be used in the disc spring stack 105. The internal stack pressure *P* is 40 barg, the first design temperature *T₁* is 90°C and the second design temperature *T₂* is -20°C, with the temperature range Δ*T* of the electrolyser stack 100 is 110 °C. The tie rods 103 are composed of a chromium-molybdenum steel (42CrMo4), having maximum tensile strength ϑₘₐₓ of 1040 MPa.

The number of cell frames 201 used in the electrolyser stack 100 is *N_{c}* = 240, each cell frame 201 has thickness of *t_{c}=* 6.1 mm and the coefficient of thermal expansion of the cell frame *s_{c}* 201 is 60 * 10⁻⁶ 1/°C. The thermal expansion of the cell frames 201, Δ*₁*, is calculated by using equation (1) as Δ*₁*=9.66 mm. The number of gaskets 202 in the electrolyser stack 100 is 241, each gasket has thickness *t_{g}* of 0.9 mm and the coefficient of thermal expansion of the gasket *s_{g}* is 60 * 10⁻⁶ 1/°C. The thermal expansion of the gaskets 202 is calculated as Δ*₂*= 1.43 mm by using equation (2). When the loaded length of the tie rods 103 / is 2000 mm and the coefficient of thermal expansion of tie rod 103 *sₜ* is 10 * 10⁻⁶ 1/°C, the combined thermal expansion of the tie rods 103 in the electrolyser stack 100 is calculated using equation (3): Δ*₃*=2.2 mm. The total thermal travel Δ_{Σ} of the electrolyser stack 100 is calculated based on the thermal travel of the cell frames 201, gaskets 202 and tie rods 103.

The disc spring forces *F₁* and *F*₂ depend on the material and dimensions of the disc spring 301, these values can be derived from the data sheet provided by the disc spring manufacturers. Furthermore, the disc spring forces *F₁* and *F*₂ vary based on the number of disc springs 301 and arrangement of disc springs 301 in the disc spring stack 105.

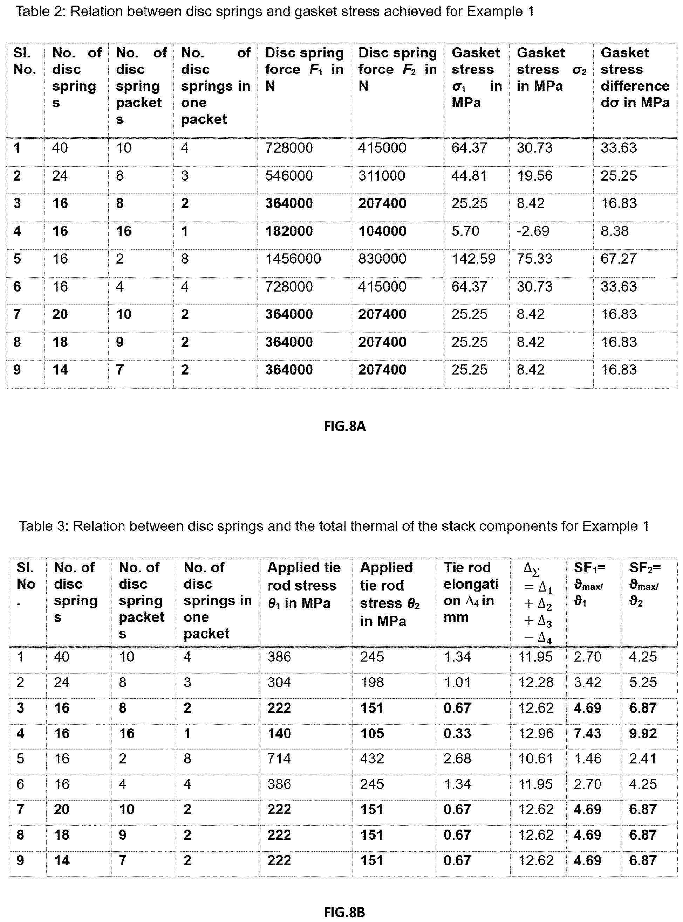

According to the present invention, keeping the aforementioned parameters constant, a study is made to vary the number of disc springs 301 and their arrangement in the disc spring stacks 105, and identify the disc spring arrangement which is suitable to obtain the required gasket stress difference d*σ* and stack core length difference *dL.* The values for the number of disc springs 301 and the corresponding gasket stress achieved are listed in Fig. 8A, Table 2, whereas the relation between the number of disc springs 301 and the corresponding thermal travel Δ_{Σ} possible are listed in Fig. 8B, Table 3. Table 3 also lists the safety factor of the tie rods *SF₁* and *SF₂* at the corresponding design temperatures *T₁* and *T₂* based on the applied tie rod stresses *ϑ₁* and *ϑ₂.*

Referring to Table 2, cases 1, 2, 5, and 6 are not ideal disc spring arrangements to be used in the electrolyser stack 100 described in Example 1 as the gasket stress difference d*σ* is higher than the range of 0 to 20 MPa, based on the requirement of the present invention. Even though the disc spring arrangements mentioned in cases 1, 2, 5, and 6 are able to achieve the stack core length difference *dL* within the required range 0 to 20 mm as the thermal travel Δ_{Σ} of these cases are within the range of 0 to 20 mm, the safety factor *SF* of tie rod 103 for the disc spring arrangements 1, 2, 5, and 6 are below the required range of 4 to 8. The disc spring arrangements 1, 2, 5, and 6 which do not meet the requirements of the present invention, when used in the electrolyser stack 100, can lead to poor compression and result in gasket failure, causing mechanical failure of the electrolyser stack 100.

Disc spring arrangements in cases 3, 4, 7, 8 and 9 listed in Table 2 and 3 fulfill all conditions required by the present invention, the gasket stress difference d*σ* in all the aforementioned cases is within the range of 0 to 20 MPa, the stack core length difference *dL* in the mentioned cases is within the range of 0 to 20 mm. Any of these disc spring arrangements can be used to maintain optimal compression of the electrolyser stack 100 for achieving long term stability and efficiency of the stack 100.

### Example 2:

The electrolyser stack 100 of Example 2 has 90 cells, with 20 tie rods 103 used to hold the cells between the two end plates 101 and 102. The surface area of each individual stack component as listed: area of the cell frame central opening *A* = 97313 mm², surface area of a single gasket *S* = 41197 mm². The disc spring 301 used in Example 2 is composed of DIN 1.8159 steel (51CrV4) and has the following dimensions: *D*ₑ=80 mm, *Dᵢ*=24.5 mm, Z=5.4 mm, *lₒ*= 7.30 mm. The internal stack pressure *P is* 40 barg, the first design temperature *T₁* is 90 °C and the second design temperature *T₂* is -20 °C, with the temperature range Δ*T* of the electrolyser stack 100 is 110 °C. The tie rods 103 are composed of a chromium-molybdenum steel (42CrMo4), having maximum tensile strength *ϑₘₐₓ* of 1040 MPa.

The total thermal travel Δ_{Σ} of the electrolyser stack 100 is calculated based on the thermal travel of the cell frames 201, gaskets 202 and tie rods 103. The number of cell frames 201 used in the electrolyser stack 100 is *N_{c}* = 180, each cell frame 201 has thickness of *t_{c}=* 8.5 mm and the coefficient of thermal expansion of the cell frame 201 *s_{c}* 201 is 25 * 10⁻⁶1/°C. The thermal expansion of the cell frames 201, Δ*₁*, is calculated by using equation (1) as Δ*₁*=4.2 mm. The number of gaskets 202 used in the electrolyser stack 100 is *N_{g} =* 181, each gasket has thickness of *t_{g}* = 0.9 mm and the coefficient of thermal expansion of the gasket *s_{g}* is 60 * 10⁻⁶1/°C. The thermal expansion of the gaskets 202 is calculated as Δ*₂*= 1.07 mm by using equation (2). When the loaded length of the tie rods 103 is *l* = 2000 mm and the coefficient of thermal expansion of tie rod 103 is *sₜ* 10⁻⁵1/°C, the combined thermal expansion of the tie rods 103 in the electrolyser stack 100 is calculated using equation (3): Δ*₃*=2.2 mm.

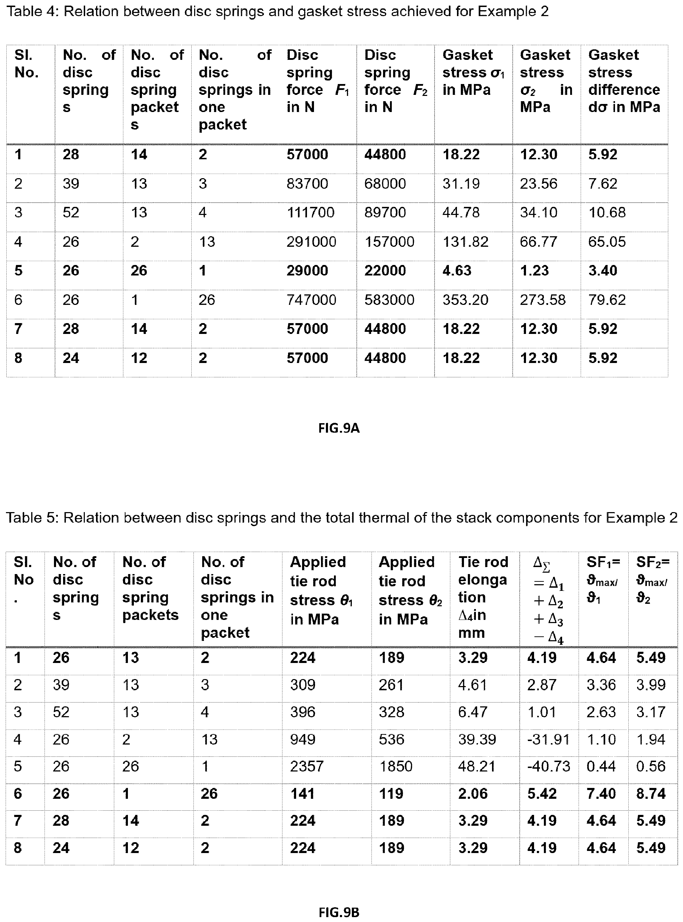

As obtained from the manufacturer's data sheet of the disc spring 301, *F₁* and *F*₂ for different number of disc springs and their arrangement in the disc spring stacks 105 are given in the Fig. 9A, Table 4. The gasket stress difference d*σ* for the corresponding disc spring arrangement is also calculated based on the force *F₁* and *F*₂ and summarized in Table 4. Fig. 9B, Table 5 lists the total thermal travel Δ_{Σ} of stack along with the safety factor of the tie rods *SF₁* and *SF₂* at the corresponding design temperatures *T₁* and *T₂* based on the applied tie rod stresses *ϑ₁* and ϑ*₂*, in relation to different disc spring arrangements.

Referring to Table 4 and 5, cases 4 and 5 are detrimental disc spring arrangement to be used in the electrolyser stack 100 described in Example 1 as the tie rod elongation in these cases is excessively high, posing a significant risk of tie rod failure. Additionally, the gasket stress difference d*σ* is higher than the range of 0 to 20 MPa and the stack core length difference *dL* is higher than the required range 0 to 20 mm, as the thermal travel Δ_{Σ} is less than 20 mm. Furthermore, even though cases 2 and 3 satisfy the requirements for the stack core length difference *dL* and the gasket stress difference *dσ,* the safety factor SF of tie rod 103 for the disc spring arrangements falls below the required range of 4 to 8. The disc spring arrangements 2, 3, 4 and 5 do not conform to the requirements of the present invention.
Disc spring arrangements in cases 1, 6, 7 and 8, listed in Table 4 and 5, fulfill all conditions required by the present invention, the gasket stress difference *dσ* in all the mentioned cases is within the range of 0 to 20 MPa, the stack core length difference dL is within the range of 0 to 20mm. Any of these disc spring arrangements can be used to maintain optimal compression of the electrolyser stack 100 for achieving long term stability and efficiency of the stack.

### List of reference signs:

- 100: pressurized alkaline electrolyser stack
- 100a: stack core
- 100b: compression system
- 101: first end plate
- 102: second end plate
- 103: tie rod
- 104: first fastener
- 105: disc spring stack
- 106: second fastener
- 107: anolyte inlet channel
- 108: catholyte inlet channel
- 109: outlet channel
- 110: outlet channel
- 112: negative terminal
- 113: positive terminal
- 114: skid structure
- 115: main frame
- 116: footing structure
- 117: drip tray
- 118: slider
- 200: electrolysis cell
- 201: cell frame
- 201a: inner frame
- 201b: outer structural ring
- 202: gasket
- 203: bipolar plate
- 204: anode
- 205: cathode
- 206: diaphragm
- 207: spacer
- 301: disc spring
- 302: packet
- 303: guide component
- 303a: outer sleeve
- 303b: washer

## Claims

1. A pressurized alkaline electrolyser stack (100), comprising:
a stack core (100a) comprising a plurality of electrolysis cells (200), wherein each electrolysis cell (200) comprises an anode chamber comprising an anode (204), a cathode chamber comprising a cathode (205), a diaphragm (206) separating the anode chamber and the cathode chamber, at least one cell frame (201) and at least one gasket (202);
wherein the stack core (100a) is configured to have a first stack core length, *L*₁, and a first gasket stress, *σ*₁*,* at a first design temperature, *T*₁, and a second stack core length, *L*₂,
and a second gasket stress, *σ*₂, at a second design temperature, *T*₂,
wherein the first design temperature, *T₁*, is at least 80 °C and the second design temperature, *T₂*, is less than 30 °C, and
wherein a stack core length difference, *dL = L₁-L₂,* is from 0 mm to 20 mm, and
a gasket stress difference, *dσ=σ₁-σ₂,* is from 0 MPa to 20 MPa.

2. The electrolyser stack (100) according to claim 1, further comprises a compression system (100b), wherein the compression system comprises
a first end plate (101) with an inner face, an outer face and *Nₜ* longitudinal holes, a second end plate (102) with an inner face, an outer face and *Nₜ* longitudinal holes,
*Nₜ* tie rods (103), wherein each of the tie rods (103) is penetrating through the longitudinal holes of the first end plate (101) and through the longitudinal holes the second end plate (102),
at least *Nₜ* first fasteners (104), wherein at least one first fastener (104) is arranged on each tie rod (103), located at the outer face of the first end plate (101),
at least *Nₜ* disc spring stacks (105), wherein each disc spring stack (105) comprises at least one disc spring (301), is arranged on each tie rod (103), and wherein the disc spring stacks (105) are located at the outer face of the second end plate (102), and
at least *Nₜ* second fasteners (106), wherein at least one second fastener (106) is arranged on each tie rod (103), located at the end of respective disc spring stack (105);
wherein the number of disc springs in the disc spring stacks (105) is selected such that a total thermal travel, *Δ_{Σ}*, of the stack is from 0 mm to 20 mm, and the gasket stress difference, *dσ*, is from 0 MPa to 20 MPa.

3. The electrolyser stack (100) according to any of the preceding claims, wherein a maximum allowable working pressure (MAWP) of the pressurized electrolyser stack (100) is from 10 barg to 60 barg, and preferably from 10 barg to 40 barg.

4. The electrolyser stack (100) according to any of the preceding claims, wherein the number of cell frames (201), *N_{c}*, in the electrolyser stack (100) is from 50 to 1000, and preferably from 160 to 500.

5. The electrolyser stack (100) according to any of the preceding claims, wherein the first design temperature, *T*₁, is (90 ± 5) °C; and/or wherein the second design temperature, *T*₂, is (-20 ± 5) °C.

6. The electrolyser stack (100) according to any of the preceding claims, wherein each cell frame (201) comprises an inner frame (201a) and an outer structural ring (201b).

7. The electrolyser stack (100) according to any of the preceding claims, wherein a ratio of a maximum tensile strength, ϑ*ₘₐₓ*, of the tie rod (103) to an applied tie rod stress, *ϑ_{applied},* is higher than a safety factor, SF, wherein the safety factor, SF, is in the range from 4 to 8, and preferably from 4 to 5.

8. The electrolyser stack (100) according to any of the preceding claims, wherein the first gasket stress, *σ*₁*,* and the second gasket stress, σ₂, is greater than 0 MPa.

9. The electrolyser stack (100) according to any of the claims 2 to 8, wherein each disc spring stack (105) comprises from 2 to 30 disc springs (301), and preferably from 2 to 20 disc springs (301).

10. The electrolyser stack (100) according to any of the preceding claims, wherein the number of tie rods (103) *Nₜ* is from 4 to 30, preferably from 10 to 20.

11. The electrolyser stack (100) according to any of the claims claim 2 to 10, wherein the disc spring stack (105) comprises a guide component (303), wherein the guide component (303) comprises an outer sleeve (303a) covering an outer surface of the disc spring (301); and a washer (303b) between the tie rod (103) and an outer ring of the disc spring (301).

12. The electrolyser stack (100) according to any of the preceding claims, wherein the electrolyser stack (100) is mounted on a skid structure (114), wherein the skid structure (114) comprises a plurality of sliders (118) supporting the end plates of the stack (100), wherein the sliders (118) are configured to accommodate the stack core length difference, *dL.*

13. The electrolyser stack (100) according to any of the preceding claims, wherein the number of tie rods (103), *Nₜ,* is 12, the first design temperature *T*₁ is (90 ± 5) °C and the second design temperature *T*₂ is (-20 ± 5) °C, the number of cell frames, *N_{c}*, is 240, and the stack core length difference, dL, is from 6.5 mm to 7.5 mm, and the gasket stress difference, d*σ*, is from 14 MPa to 17 MPa.

14. An electrolyser system for electrolysis of water in a liquid alkaline medium using the electrolyser stack (100) according to any of the preceding claims.

15. A method for electrolysis of water in a liquid alkaline medium using the electrolyser stack (100) according to any of the preceding claims.

## Amended claims

### Amended claims in accordance with Rule 137(2) EPC.

1. A pressurized alkaline electrolyser stack (100), comprising:
a stack core (100a) comprising a plurality of electrolysis cells (200), wherein each electrolysis cell (200) comprises an anode chamber comprising an anode (204), a cathode chamber comprising a cathode (205), a diaphragm (206) separating the anode chamber and the cathode chamber, at least one cell frame (201) and at least one gasket (202); and
a compression system comprising:
a first end plate (101) with an inner face, an outer face and Nt longitudinal holes,
a second end plate (102) with an inner face, an outer face and Nt longitudinal holes, *Nt* tie rods (103), wherein each of the tie rods (103) is penetrating through the longitudinal holes of the first end plate (101) and through the longitudinal holes the second end plate (102), and
at least Nt disc spring stacks (105), wherein each disc spring stack (105) comprises at least one disc spring (301), is arranged on each tie rod (103), and wherein the disc spring stacks (105) are located at the outer face of the second end plate (102),
wherein the stack core (100a) is configured to have a first stack core length, *L*₁, and a first gasket stress, σ₁, at a first design temperature, *T*₁, and a second stack core length, *L*₂, and a second gasket stress, *σ*₂, at a second design temperature, *T*₂,
wherein the first design temperature, *T₁*, is at least 80 °C and the second design temperature, *T*₂, is less than 30 °C,
wherein the number of disc springs in the disc spring stacks (105) is selected such that a stack core length difference dL is from 0 mm to 20 mm, and the gasket stress difference, *dσ*, is from 0 MPa to 20 MPa, and
wherein the first gasket stress, *σ*₁, and the second gasket stress, *σ*₂, are greater than or equal to 5 MPa.

2. The electrolyser stack (100) according to claim 1, wherein the compression system further comprises
at least *Nₜ* first fasteners (104), wherein at least one first fastener (104) is arranged on each tie rod (103), located at the outer face of the first end plate (101),and
at least Nt second fasteners (106), wherein at least one second fastener (106) is arranged on each tie rod (103), located at the end of respective disc spring stack (105) wherein the number of disc springs in the disc spring stacks (105) is selected such that a total thermal travel, *Δ_{Σ}*, of the stack is from 0 mm to 20 mm.

3. The electrolyser stack (100) according to any of the preceding claims, wherein a maximum allowable working pressure (MAWP) of the pressurized electrolyser stack (100) is from 10 barg to 60 barg, and preferably from 10 barg to 40 barg.

4. The electrolyser stack (100) according to any of the preceding claims, wherein the number of cell frames (201), *N_{c}*, in the electrolyser stack (100) is from 50 to 1000, and preferably from 160 to 500.

5. The electrolyser stack (100) according to any of the preceding claims, wherein the first design temperature, *T*₁, is (90 ± 5) °C; and/or wherein the second design temperature, *T*₂, is (-20 ± 5) °C.

6. The electrolyser stack (100) according to any of the preceding claims, wherein each cell frame (201) comprises an inner frame (201a) and an outer structural ring (201b).

7. The electrolyser stack (100) according to any of the preceding claims, wherein a ratio of a maximum tensile strength, ϑ*ₘₐₓ*, of the tie rod (103) to an applied tie rod stress, *ϑ_{applied},* is higher than a safety factor, SF, wherein the safety factor, SF, is in the range from 4 to 8, and preferably from 4 to 5.

8. The electrolyser stack (100) according to any of the preceding claims, wherein the first gasket stress, σ₁, and the second gasket stress, σ₂, is greater than 10 MPa.

9. The electrolyser stack (100) according to any of the claims 2 to 8, wherein each disc spring stack (105) comprises from 2 to 30 disc springs (301), and preferably from 2 to 20 disc springs (301).

10. The electrolyser stack (100) according to any of the preceding claims, wherein the number of tie rods (103) *Nₜ* is from 4 to 30, preferably from 10 to 20.

11. The electrolyser stack (100) according to any of the claims claim 2 to 10, wherein the disc spring stack (105) comprises a guide component (303), wherein the guide component (303) comprises an outer sleeve (303a) covering an outer surface of the disc springs (301); and a washer (303b) between the disc springs (105) and the second fasteners (106).

12. The electrolyser stack (100) according to any of the preceding claims, wherein the electrolyser stack (100) is mounted on a skid structure (114), wherein the skid structure (114) comprises a plurality of sliders (118) supporting the end plates of the stack (100), wherein the sliders (118) are configured to accommodate the stack core length difference, *dL.*

13. The electrolyser stack (100) according to any of the preceding claims, wherein the number of tie rods (103), *Nₜ,* is 12, the first design temperature *T*₁ is (90 ± 5) °C and the second design temperature *T₂* is (-20 ± 5) °C, the number of cell frames, *N_{c},* is 240, and the stack core length difference, dL, is from 6.5 mm to 7.5 mm, and the gasket stress difference, *dσ*, is from 14 MPa to 17 MPa.

14. An electrolyser system for electrolysis of water in a liquid alkaline medium using the electrolyser stack (100) according to any of the preceding claims.

15. A method for electrolysis of water in a liquid alkaline medium using the electrolyser stack (100) according to any of the preceding claims.
